# EUROPEAN PATENT APPLICATION

(11) **EP 2 724 878 A1**
(43) Date of publication of application: **30.04.2014**
(21) Application number: 11868050.3
(22) Date of filing: 21.06.2011
(51) Int. Cl.: B60H 1/03, B60H 1/22, F02D 29/02

(54) **VEHICLE CONTROL APPARATUS**

(71) Applicant: TOYOTA JIDOSHA KABUSHIKI KAISHA, Toyota-shi, Aichi-ken, 471-8571 (JP)
(72) Inventor: KAMATANI, Hideki, Toyota-shi Aichi 471-8571 (JP)
(74) Representative: Winter, Brandl, Fürniss, Hübner, Röss, Kaiser, Polte - Partnerschaft
(86) International application number: PCT/JP2011/064180
(87) International publication number: WO 2012/176284

(57) **Abstract**

When there is a request for heating prior to completion of warm-up of an engine (6), an air-conditioner electronic control unit (10) uses a PTC heater (5) as a heat source for heating and cancels a warm-up request for the engine (6) if the state of charge of a battery (7) is high, while the control unit uses the engine (6) as a heat source for heating and sets a warm-up request for the engine (6) if the state of charge of the battery (7) is low. Thus, stopping the engine for heating is less frequently inhibited while ensuring the heating performance.

## Description

### TECHNICAL FIELD

The present invention relates to a vehicle control apparatus capable of using two heat sources for heating, which are an electric heat source for generating heat by electric power and an engine.

### BACKGROUND ART

In recent years, hybrid vehicles having two power sources, an engine and a motor, are in practical use. Patent Document 1 describes a conventional control apparatus for a hybrid vehicle. The control apparatus of the Patent Document 1 changes the operation mode of the engine between a normal operation mode and an operation mode for a heater depending on the temperature of the engine coolant when there is a request for heating. In the operation mode for the heater, which is selected when the temperature of the engine coolant is low, stopping the engine is inhibited to promote an increase in the temperature of the engine coolant so that heating performance is ensured.

### PRIOR ART DOCUMENTS

### Patent Documents

Patent Document 1: Japanese Laid-Open Patent Publication No. 2009-160978

### SUMMARY OF THE INVENTION

### Problems that the Invention is to Solve

The conventional control apparatus warms-up the engine and inhibits stopping the engine when there is a request for heating prior to completion of the engine warm-up. When there are frequent requests for heating such as in cold climates, engine warm-up is performed frequently, which hinders the efficient use of fuel.

A similar problem occurs in a vehicle having an idle reduction control, which automatically stops the engine such as when waiting for a traffic light. Even in this type of vehicle, if there is a request for heating prior to completion of the engine warm-up, the warm-up needs to be continued. In such a case, the engine cannot be stopped.

Other than the above vehicle, a similar problem can occur in a vehicle that performs warm-up promotion control by increasing the fuel injection amount when there is a request for heating prior to completion of engine warm-up. The vehicle cannot efficiently use fuel due to the frequent performance of the warm-up promotion control if there are frequent requests for heating.

Accordingly, it is an objective of the present invention to provide a vehicle control apparatus that reduces the drop in fuel efficiency while ensuring heating performance. Means for Solving the Problems

To achieve the above objective, in one aspect of the present invention, a first vehicle control apparatus is capable of using two heat sources for heating, the heat sources being an electric heat source for generating heat by electric power and an engine. When there is a request for heating prior to completion of engine warm-up, the control apparatus selects the heat source to use for heating from the electric heat source and the engine according to a state of charge of a battery.

Some vehicles are equipped with an electric heat source that generates heat by electric power, such as, e.g., a positive temperature coefficient (PTC) heater. Such a vehicle can provide heating to the passenger compartment without using the heat from the engine. The vehicle can ensure heating without warm-up operation of the engine even if there is a request for heating prior to completion of the engine warm-up. However, if the electric heat source is used when the state of charge (SOC) of the battery, which provides electric power used for the electric heat source, is low, the electric power may be reduced to an insufficient level. In such a case, the engine needs to run to charge the battery.

In this respect, the first vehicle control apparatus of the present invention selects the heat source to use for heating from the electric heat source and the engine according to the SOC of the battery when there is a request for heating prior to completion of the engine warm-up. Thus, the first vehicle control apparatus of the present invention can use the electric heat source to reduce warm-up operation of the engine as long as not creating an electric power shortage, and reduce the drop in fuel efficiency while ensuring the heating performance.

To achieve the above objective, in another aspect of the present invention, a second vehicle control apparatus is capable of using two heat sources for heating, the heat sources being an electric heat source for generating heat by electric power and an engine. When there is a request for heating prior to completion of engine warm-up, the control apparatus selects the electric heat source as a heat source for heating if a state of charge of a battery is high, and the control apparatus selects the engine as a heat source for heating if the state of charge of the battery is low.

The second vehicle control apparatus of the present invention selects the electric heat source as the heat source for heating if the SOC of the battery is high when there is a request for heating prior to completion of the engine warm-up. This ensures heating performance without warm-up operation of the engine when the battery has enough electric power for the electric heat source to adequately heat the passenger compartment. Thus, the second vehicle control apparatus of the present invention can reduce the drop in fuel efficiency while ensuring heating performance.

To achieve the above objective, in further another aspect of the present invention, a third vehicle control apparatus is capable of using two heat sources for heating, the heat sources being an electric heat source for generating heat by electric power and an engine, wherein the control apparatus raises an operation rate of the engine according to setting of a warm-up request. When there is a request for heating prior to completion of engine warm-up, the control apparatus selects the electric heat source as a heat source for heating and cancels the setting of the warm-up request if a state of charge of a battery is high, and the control apparatus selects the engine as a heat source for heating and sets the warm-up request if the state of charge of the battery is low.

The third vehicle control apparatus of the present invention selects the electric heat source as the heat source for heating and cancels the setting of the warm-up request if the SOC of the battery is high when there is a request for heating prior to completion of the engine warm-up. This ensures heating performance without warm-up operation of the engine responsive to the setting of the warm-up request when the battery has enough electric power for the electric heat source to adequately heat the passenger compartment. Thus, the third vehicle control apparatus of the present invention can reduce the drop in fuel efficiency while ensuring heating performance.

To achieve the above objective, in further another aspect of the present invention, a fourth vehicle control apparatus is employed for a hybrid vehicle, which includes an engine and a motor as power sources. The control apparatus is capable of using two heat sources for heating, the heat sources being an electric heat source for generating heat by electric power and the engine, wherein the control apparatus inhibits stopping the engine according to setting of a warm-up request. When there is a request for heating prior to completion of engine warm-up, the control apparatus selects the electric heat source as a heat source for heating and cancels the setting of the warm-up request if a state of charge of a battery is high, and the control apparatus selects the engine as a heat source for heating and sets the warm-up request if the state of charge of the battery is low.

The fourth vehicle control apparatus of the present invention selects the electric heat source as the heat source for heating and cancels the setting of the warm-up request to allow the engine to stop if the SOC of the battery is high when there is a request for heating prior to completion of the engine warm-up. This ensures heating performance without inhibiting stopping the engine when the battery has enough electric power for the electric heat source to adequately heat the passenger compartment. Thus, the fourth vehicle control apparatus of the present invention can reduce the drop in fuel efficiency while ensuring heating performance.

### BRIEF DESCRIPTION OF THE DRAWINGS

Fig. 1 is a schematic block diagram showing the structure of a vehicle control apparatus according to a first embodiment of the present invention; and
Fig. 2 is a flowchart showing a procedure for processing a heat source selection control routine employed in the present embodiment.

### MODES FOR CARRYING OUT THE INVENTION

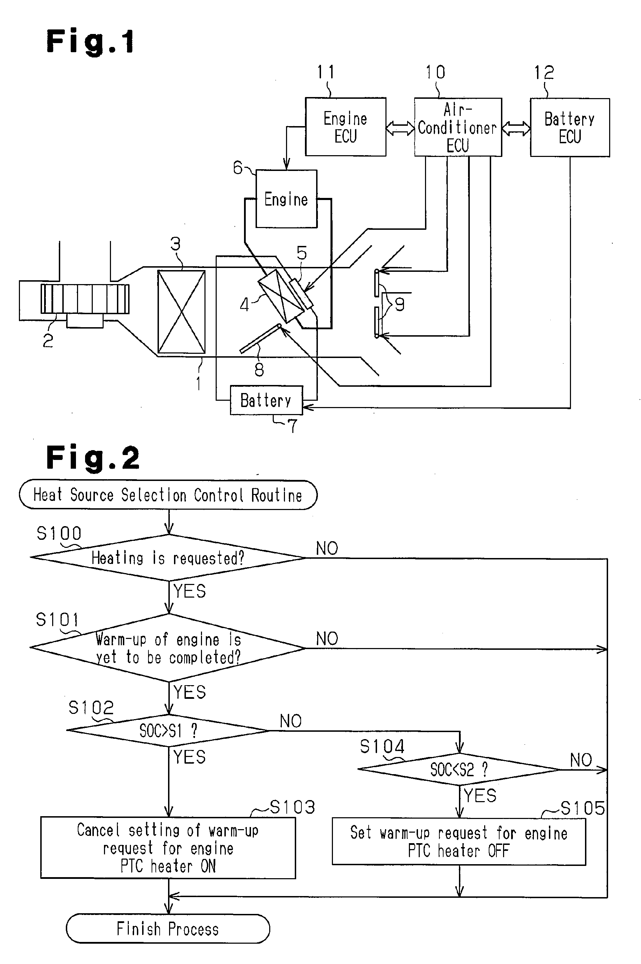

A vehicle control apparatus in accordance with a first embodiment of the present invention will now be described with reference to Figs. 1 and 2. The vehicle control apparatus of the present embodiment is employed for a hybrid vehicle provided with two power sources, an engine and a motor.

Fig. 1 shows a blower 2 arranged at the upstream side of a duct 1 of a vehicle-mounted air-conditioner. The blower 2 draws in air and blows the air into a passenger compartment. An evaporator 3 for cooling air is arranged at the downstream side of the blower 2.

A heater core 4 and a PTC heater 5 for warming air are arranged at the downstream side of the evaporator 3. A coolant flows along the heater core 4 after passing through an engine 6. The heater core 4 warms air with waste heat of the engine 6 transferred via the coolant serving as a heat transfer medium. The PTC heater 5 is an electric heat source, which generates heat by electric power supplied by a battery 7. An air mix door 8 for adjusting the amount of air passing through the heater core 4 and the PTC heater 5 is arranged in front of the heater core 4 and the PTC heater 5. A plurality of mode select doors 9 for changing outlets of warm and cool air is arranged at the downstream side of the heater core 4 and the PTC heater 5.

An air-conditioner electronic control unit (hereinafter, air-conditioner ECU) 10 controls the vehicle-mounted air-conditioner. The air-conditioner ECU 10 is a control unit that controls the air mix door 8 and the mode select doors 9 to control air flow in the vehicle-mounted air-conditioner. The air-conditioner ECU 10 also controls the PTC heater 5.

An in-vehicle network connects the air-conditioner ECU 10 to an electronic control unit for engine (hereinafter, engine ECU) 11, which controls the engine 6, and an electronic control unit for battery (hereinafter, battery ECU) 12, which controls the battery 7. The air-conditioner ECU 10 receives an operational state of the engine 6 from the engine ECU 11, and as necessary, notifies the engine ECU 11 of setting of a warm-up request for the engine 6. When the warm-up request is set, the engine ECU 11 inhibits stopping the engine 6 to promptly complete warm-up of the engine 6. The air-conditioner ECU 10 receives the state of charge (SOC) of the battery 7 from the battery ECU 12.

The air-conditioner ECU 10 of the present embodiment selects one of the heater core 4 and the PTC heater 5 to use for heating, that is, selects the heat source used for heating from the engine 6 and the PTC heater 5, based on the SOC of the battery 7 when there is a request for heating prior to completion of the warm-up of the engine 6. Fig. 2 shows a heat source selection control routine, which processes the selection of the heat source. The air-conditioner ECU 10 repeatedly executes the heat source selection control routine at predetermined control periods.

When the routine starts the process, step S100 determines whether heating is requested. When heating is not requested (S100: NO), the routine finishes this process.

If there is a request for heating (S100: YES), step S101 determines whether warm-up of the engine 6 is yet to be completed. When warm-up of the engine 6 has already been completed (S101: NO), the routine finishes this process. In this case, the heater core 4 is used for heating, that is, the engine 6 is used as a heat source.

In contrast, when warm-up of the engine 6 is yet to be completed (S101: YES), step S102 determines whether the SOC of the battery 7 is higher than a threshold S1. The threshold S1 is set at a value of the SOC that requires no charging of the battery 7 even if the PTC heater 5 is used for heating until warm-up of the engine 6 is completed. If the SOC exceeds the threshold S1 (S102: YES), step S103 cancels the setting of the warm-up request for the engine 6 to allow the engine to be stopped, and further, turns on the PTC heater 5. The routine then finishes this process.

When the SOC of the battery 7 is lower than or equal to the threshold S1 (S102: NO), step S104 determines whether the SOC of the battery 7 is lower than a threshold S2. The threshold S2 is set at a value slightly lower than the threshold S1. When the SOC of the battery 7 is higher than or equal to the threshold S2 (S104: NO), the routine directly finishes this process. When the SOC of the battery 7 is lower than the threshold S2 (S104: YES), the process moves to step S105. When the process moves to step S105, step S105 sets a warm-up request for the engine 6 to inhibit stopping the engine, and turns off the PTC heater 5. The routine then finishes this process.

The present embodiment has the operations described below.

If the engine 6 is used as the heat source for providing heating of the passenger compartment when there is a request for heating prior to completion of warm-up of the engine 6, the engine 6 needs to keep running in order to continue supplying heat, and the engine 6 cannot be stopped. In contrast, if the PTC heater 5 is used as the heat source for providing heating of the passenger compartment, the engine 6 does not need to supply heat, and the engine 6 is allowed to be stopped. However, if accompanying consumption of electric power leads to an insufficient level of the SOC of the battery 7, the engine 6 needs to run for charging.

In this respect, the present embodiment cancels the setting of the warm-up request for the engine 6, and uses the PTC heater 5, which is an electric heat source for generating heat by electric power, as a heat source to heat the passenger compartment if the SOC of the battery 7 is high when there is a request for heating prior to completion of warm-up of the engine 6. Further, the present embodiment sets a warm-up request for the engine 6 and uses the heater core 4 to heat the passenger compartment, using the engine 6 as a heat source, if the SOC of the battery 7 is low when there is a request for heating prior to completion of warm-up of the engine 6. Thus, the PTC heater 5 heats the passenger compartment as long as the engine 6 does not need to run for charging when there is a request for heating prior to completion of warm-up of the engine 6. Accordingly, the heating is performed with the minimized operation of the engine 6, which accompanies fuel consumption.

The present embodiment has the advantage described below.

(1) The present embodiment heats the passenger compartment by selecting the PTC heater 5 as a heat source for heating, and cancels the setting of the warm-up request for the engine 6 if the SOC of the battery 7 is high when there is a request for heating prior to completion of warm-up of the engine 6. Further, the present embodiment heats the passenger compartment by selecting the engine 6 as a heat source for heating, and sets a warm-up request for the engine 6 if the SOC of the battery 7 is low when there is a request for heating prior to completion of warm-up of the engine 6. Thus, the present embodiment reduces the drop in fuel efficiency while ensuring heating performance.

The embodiment described above may be modified as described below.

In the above embodiment, the vehicle control apparatus of the present invention is described to be employed for a hybrid vehicle. However, the present invention is also applicable to a vehicle having an idle reduction control, which automatically stops an engine when waiting for a traffic light, for example. Such a vehicle also needs to inhibit automatic engine stopping to promote engine warm-up if the engine is used as a heat source for heating a passenger compartment when there is a request for heating prior to completion of warm-up of the engine. In this case, when the PTC heater heats the passenger compartment under the condition of a high SOC of a battery, automatic engine stopping is allowed while heating continues. Thus, this modification decreases drop in fuel efficiency while ensuring heating performance.

Further, the present invention is applicable to a vehicle that does not stop the engine while the ignition switch is on. In such a vehicle, if engine warm-up promotion control is performed, for example, by increasing the fuel injection when heating is performed by using the engine as a heat source prior to completion of the engine warm-up, fuel consumption is increased by using the engine as a heat source. However, if a PTC heater heats the passenger compartment under the condition of a high SOC of a battery, increase in fuel consumption associated with the warm-up promotion control is suppressed. Thus, this modification decreases drop in fuel efficiency while ensuring heating performance.

Engine warm-up promotion control may be performed by raising an engine operation rate, e.g., shortening a stoppage period of the engine or raising an idling engine speed, instead of inhibition of engine stopping or increasing fuel injection. Such warm-up promotion control leads to increase in fuel consumption while raising the engine operation rate to promote engine warm-up. In this case, if a PTC heater heats a passenger compartment under the condition of a high SOC of a battery, increase in fuel consumption associated with warm-up promotion control is suppressed. Thus, this modification decreases drop in fuel efficiency while ensuring heating performance.

The above embodiment uses the PTC heater as an electric heat source, which generates heat by electric power. However, other electric heaters than the PTC heater are employable as an electric heat source.

### Description of the Reference Numerals

1: duct, 2: blower, 3: evaporator, 4: heater core, 5: PTC heater (electric heat source), 6: engine, 7: battery, 8: air mix door, 9: mode select door, 10: air-conditioner electronic control unit (air-conditioner ECU), 11; electronic control unit for engine (engine ECU), 12: electronic control unit for battery (battery ECU).

## Claims

1. A vehicle control apparatus capable of using two heat sources for heating, the heat sources being an electric heat source for generating heat by electric power and an engine,
the vehicle control apparatus being **characterized in that**, when there is a request for heating prior to completion of engine warm-up, the vehicle control apparatus selects the heat source to use for heating from the electric heat source and the engine according to a state of charge of a battery.

2. A vehicle control apparatus capable of using two heat sources for heating, the heat sources being an electric heat source for generating heat by electric power and an engine,
the vehicle control apparatus being **characterized in that**, when there is a request for heating prior to completion of engine warm-up, the vehicle control apparatus selects the electric heat source as a heat source for heating if a state of charge of a battery is high, and the vehicle control apparatus selects the engine as a heat source for heating if the state of charge of the battery is low.

3. A vehicle control apparatus capable of using two heat sources for heating, the heat sources being an electric heat source for generating heat by electric power and an engine, wherein the vehicle control apparatus raises an operation rate of the engine according to setting of a warm-up request,
the vehicle control apparatus being **characterized in that**, when there is a request for heating prior to completion of engine warm-up, the vehicle control apparatus selects the electric heat source as a heat source for heating and cancels the setting of the warm-up request if a state of charge of a battery is high, and the vehicle control apparatus selects the engine as a heat source for heating and sets the warm-up request if the state of charge of the battery is low.

4. A vehicle control apparatus employed for a hybrid vehicle, which includes an engine and a motor as power sources, the vehicle control apparatus being capable of using two heat sources for heating, the heat sources being an electric heat source for generating heat by electric power and the engine, wherein the vehicle control apparatus inhibits stopping the engine according to setting of a warm-up request,
the vehicle control apparatus being **characterized in that**, when there is a request for heating prior to completion of engine warm-up, the vehicle control apparatus selects the electric heat source as a heat source for heating and cancels the setting of the warm-up request if a state of charge of a battery is high, and the vehicle control apparatus selects the engine as a heat source for heating and sets the warm-up request if the state of charge of the battery is low.
